# EUROPEAN PATENT SPECIFICATION

(11) **EP 3 306 995 B1**
(45) Date of publication and mention of the grant of the patent: **10.03.2021**
(21) Application number: 15897413.9
(22) Date of filing: 03.07.2015
(51) Int. Cl.: H04L 5/00, H04B 7/26, H04W 72/04, H04W 8/24

(54) **COMMUNICATION METHOD AND APPARATUS**
KOMMUNIKATIONSVERFAHREN UND -VORRICHTUNG
PROCÉDÉ ET APPAREIL DE COMMUNICATION

(43) Date of publication of application: 11.04.2018
(73) Proprietor: Huawei Technologies Co., Ltd., Longgang District Shenzhen, Guangdong 518129 (CN)
(72) Inventor: JIA, Liang, Shenzhen Guangdong 518129 (CN); LYU, Yongxia, Shenzhen Guangdong 518129 (CN); LI, Xiaojie, Shenzhen Guangdong 518129 (CN)
(74) Representative: Körber, Martin Hans
(86) International application number: PCT/CN2015/083333
(87) International publication number: WO 2017/004757

(56) References cited:
- WO-A1-2014/094195
- WO-A1-2014/109561
- CN-A- 101 351 033
- CN-A- 102 415 187
- US-B2- 8 761 047

## Description

### TECHNICAL FIELD

The present invention relates to the field of communications technologies, and in particular, to a communication method and a communications apparatus.

### BACKGROUND

As mobile communication technologies develop, a user traffic volume and a data throughput continuously increase, and the 3G (3rd Generation) cannot fully meet users' requirements. Therefore, the 3GPP (3rd Generation Partnership Project) is devoted to studying on 3GPP LTE (Long Term Evolution, Long Term Evolution), which is used as evolution of a 3G system. LTE-Advanced is technology evolution based on LTE, and supports backward compatibility with an LTE system. LTE-Advanced has become a shared concept in a conference held in 2007. To provide a higher data rate and support more user services and new services, LTE-Advanced imposes new requirements on aspects such as a frequency, a bandwidth, a peak rate, and compatibility. In a process in which an LTE system is evolved into an LTE-Advanced system, a requirement for a wider frequency spectrum is to become an important factor that affects evolution. Therefore, the 3GPP proposes that a carrier aggregation technology should be used as one of key technologies in the LTE-Advanced system.

However, currently, limited by a factor such as maximum transmit power, a terminal can simultaneously activate only two carriers during carrier aggregation. In addition to a primary component carrier, the terminal can use only one secondary component carrier at a time to perform uplink transmission. Therefore, for one transmission process, at different TTIs (Transmission Time Interval, transmission time interval), the terminal can use only one secondary component carrier to perform transmission, and this consequently causes a disadvantage of relatively poor flexibility.

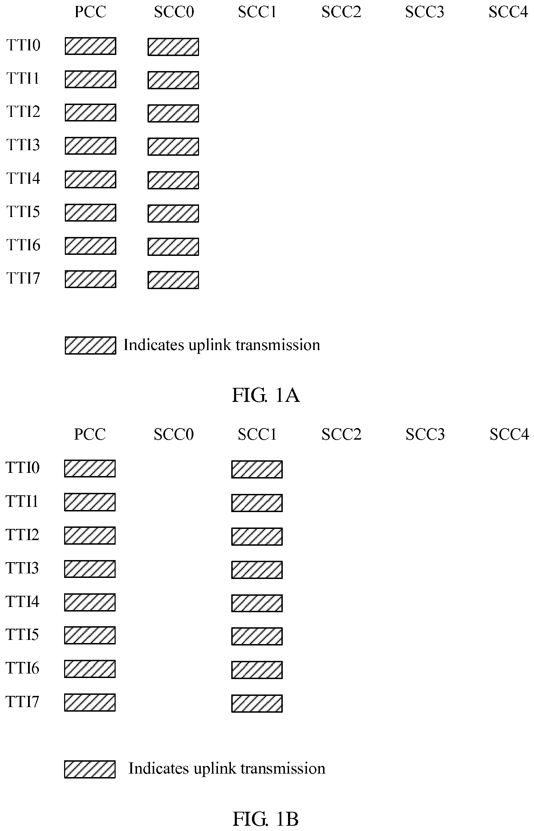

As shown in FIG. 1A, a terminal activates a PCC (primary component carrier) and an SCC (secondary component carrier) 0. In a transmission process that includes multiple TTIs, the terminal performs uplink transmission only on a same carrier instead of different carriers. Alternatively, as shown in FIG. 1B, a terminal activates a PCC and an SCC1. In a transmission process that includes multiple TTIs, the terminal performs uplink transmission only on a same carrier instead of different carriers.

In conclusion, in a current communication process, in one transmission process that includes multiple TTIs, a terminal can perform transmission only on a same carrier, and this causes a disadvantage of relatively poor flexibility.

WO 2014/094195 A1 discloses a carrier allocation method, a user equipment, and a base station, wherein the method comprises: acquiring, by a first base station, a carrier hopping pattern; sending, by the first base station to a user equipment UE, carrier configuration information, where the carrier configuration information comprises information about activating carrier hopping and/or the carrier hopping pattern, the carrier hopping pattern presents a carrier set used by a user equipment in at least one time unit, and the carrier set comprises at least one carrier; and sending, by the first base station, a signal to the UE and/or receiving a signal from the UE according to the carrier hopping pattern. A base station may select a carrier from a carrier set, in which the number of carriers is greater than the number of carriers supported by a user at any given point of time, to serve a UE, thereby achieving dynamic carrier selection and load adaptive balancing from aspects of both carrier and node and improving system performance.

US 8,761,047 B2 discloses a method and an apparatus for performing random access and uplink transmission of a User Equipment (UE) supporting Carrier Aggregation (CA).

### SUMMARY

Embodiments of the present invention provide a communication method and a communication device, so as to resolve a disadvantage of relatively poor flexibility because a terminal can perform transmission only on a same carrier in one transmission process that includes multiple TTIs.

The present invention is defined by a communication method according to independent claim 1 and a communication device according to independent claim 4.

Additional features of the invention are provided in the dependent claims. In the following, parts of the description and drawings referring to embodiments which are not covered by the claims are not presented as embodiments of the invention, but as examples useful for understanding the invention. The embodiments of the present invention provide the communication method and the communication device. In the solution, a terminal can perform transmission at different TTIs by using different carriers, and therefore, a base station can perform uplink reception at different TTIs by using different carriers. In this way, uplink transmission is implemented at different moments by using different carriers in an allowed capability range of the terminal, and this resolves a disadvantage of relatively poor flexibility.

### BRIEF DESCRIPTION OF DRAWINGS

FIG. 1A is a schematic diagram of uplink transmission in the prior art;
FIG. 1B is a schematic diagram of uplink transmission in the prior art;
FIG. 2A is a flowchart of a communication method according to an embodiment of the present invention;
FIG. 2B is a schematic diagram of transmission performed at different TTIs by using different secondary component carriers;
FIG. 2C is a schematic diagram of transmission performed at different TTIs by using different carriers;
FIG. 2D is a schematic diagram of performing beamforming;
FIG. 2E is another schematic diagram of performing beamforming;
FIG. 2F is a schematic diagram of performing an ASFN;
FIG. 2G is another schematic diagram of performing an ASFN;
FIG. 3 is a flowchart of another communication method;
FIG. 4A is a schematic diagram of a communication device according to an embodiment of the present invention;
FIG. 4B is another schematic diagram of a communication device;
FIG. 5A is a schematic diagram of another communication device; and
FIG. 5B is another schematic diagram of another communication device.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects. In the following, an implementations of the present invention are described in detail with reference to the accompanying drawings.

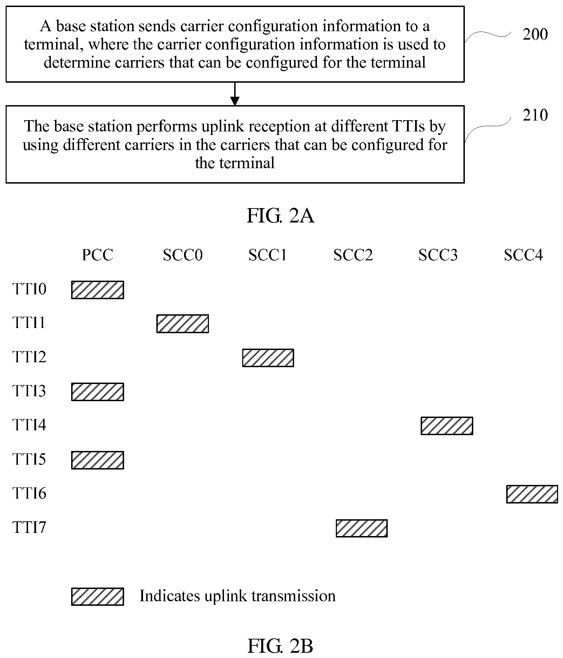

As shown in FIG. 2A, in an embodiment of the present invention, a communication procedure is as follows:
Step 200: A base station sends carrier configuration information to a terminal, where the carrier configuration information is used to determine carriers that can be configured for the terminal.
Step 210: The base station performs uplink reception at different TTIs by using different carriers in the carriers that can be configured for the terminal.

In this embodiment, in step 200 and step 210, because the terminal can perform transmission at different TTIs by using different carriers, the base station can perform uplink reception at different TTIs by using different carriers. In this way, uplink transmission is implemented at different moments by using different carriers in an allowed capability range of the terminal, and this resolves a disadvantage of relatively poor flexibility.

As shown in FIG. 2B, at a TTI0, a PCC is used to perform uplink reception; at a TTI1, an SCC0 is used to perform uplink reception; at a TTI2, an SCC1 is used to perform uplink reception; at a TTI3, the PCC is used to perform uplink reception; at a TTI4, an SCC3 is used to perform uplink reception; at a TTI5, the PCC is used to perform uplink reception; at a TTI6, an SCC4 is used to perform uplink reception; and at a TTI7, an SCC2 is used to perform uplink reception.

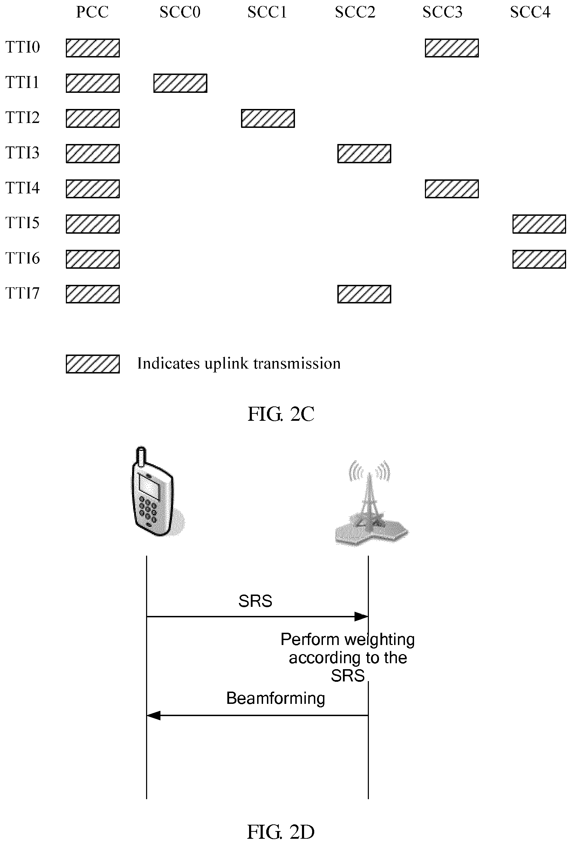

As shown in FIG. 2C, in this communication process, a different secondary component carrier may be used at a different TTI. For example, at a TTI0, an SCC3 is used to perform uplink reception; at a TTI1, an SCC0 is used to perform uplink reception; at a TTI2, an SCC1 is used to perform uplink reception; at a TTI3, an SCC2 is used to perform uplink reception; at a TTI4, the SCC3 is used to perform uplink reception; at a TTI5, an SCC4 is used to perform uplink reception; at a TTI6, the SCC4 is used to perform uplink reception; and at a TTI7, the SCC2 is used to perform uplink reception. Therefore, reception may be performed at different TTIs by using different carriers, and a disadvantage of relatively poor flexibility is resolved.

In this embodiment of the present invention, optionally, a quantity of carriers that can be configured for the terminal is greater than or equal to a quantity of carriers that can be simultaneously used by the terminal.

The quantity of carriers that can be configured for the terminal is greater than or equal to the quantity of carriers that can be simultaneously used by the terminal, that is, a carrier capability of the terminal is considered when the base station configures a carrier for the terminal. Therefore, before the base station sends the carrier configuration information to the terminal, the following operation is further included.

The base station receives the carrier capability of the terminal that is sent by the terminal, and the carrier capability includes the quantity of carriers that can be simultaneously used by the terminal. In this case, optionally, the base station may send the carrier configuration information to the terminal in the following manner.

The base station sends the carrier configuration information to the terminal according to the carrier capability of the terminal.

In this embodiment of the present invention, optionally, the carrier configuration information may include a start TTI and a transmission cycle of uplink transmission performed on each secondary component carrier in the carriers that can be configured for the terminal.

For example, there are five carriers: an SCC0, an SCC1, an SCC2, an SCC3, and a PCC. The carrier configuration information includes a start TTI0 and a transmission cycle 0 of uplink transmission performed on the SCC0, a start TTI1 and a transmission cycle 1 of uplink transmission performed on the SCC1, a start TTI2 and a transmission cycle 2 of uplink transmission performed on the SCC2, a start TTI3 and a transmission cycle 3 of uplink transmission performed on the SCC3, a start TTI4 and a transmission cycle 4 of uplink transmission performed on the SCC4, and a start TTI5 and a transmission cycle 5 of uplink transmission performed on the PCC. If there is another carrier, a start TTI and a transmission cycle of uplink transmission performed on the carrier also need to be determined, and details are not described herein.

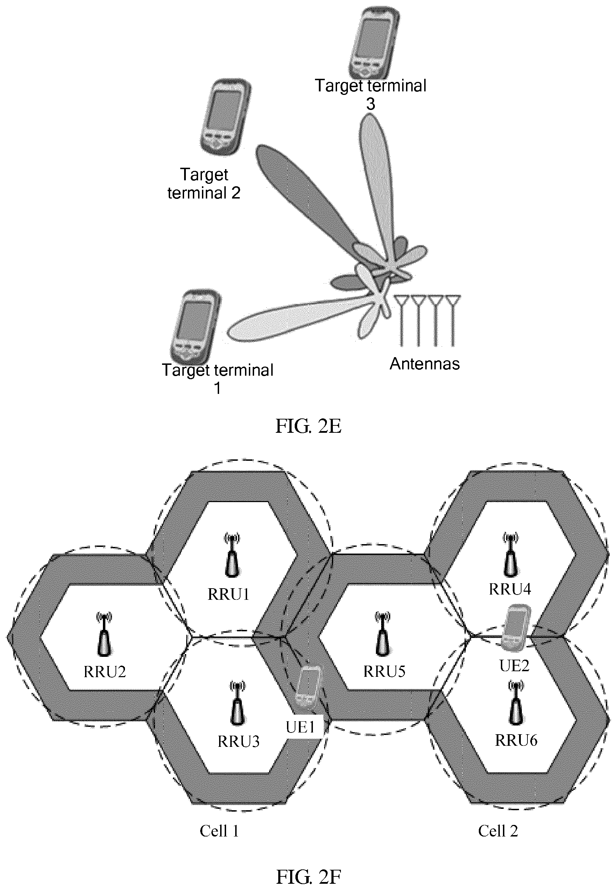

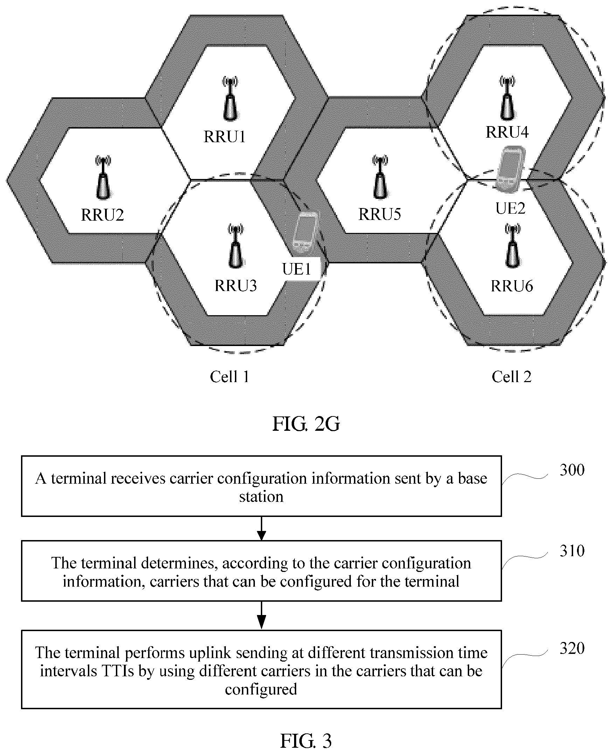

In this embodiment of the present invention, the base station needs to perform a related operation according to an SRS (Sounding Reference Signal) on a carrier in some cases. For example, as shown in FIG. 2D and FIG. 2E, the base station performs weighting according to an SRS sent by the terminal on a carrier, so as to obtain beamforming; and the terminal obtains a relatively high receive level, obtains a gain, and can obtain about 12% array gains by means of an outdoor test. For another example, to reduce inter-cell interference, for an SFN (Single Frequency Network, single frequency network) cell, instead of all RRUs, only a target RRU (Radio Remote Unit, radio remote unit) sends a signal to the terminal, and the target RRU is identified by using an SRS sent by the terminal. As shown in FIG. 2F, if all of an RRU1, an RRU2, an RRU3, and an RRU5 send a signal to a terminal 1, reception performed by another terminal is affected. To avoid interference, a target RRU of the terminal 1 may be selected as the RRU3. Similarly, as shown in FIG. 2G, target RRUs of a terminal 2 may be selected as an RRU4 and an RRU6.

However, currently, the terminal does not transmit an SRS on some carriers. The base station cannot perform weighting on a carrier because the base station cannot obtain an SRS on the carrier, and cannot implement beamforming.

Therefore, in order that the base station can perform weighting on each used carrier so as to further implement beamforming, an SRS sent by the terminal can be received on each carrier used by the base station. Therefore, in this embodiment of the present invention, when the base station performs uplink reception at different TTIs by using different carriers in the carriers that can be configured for the terminal, optionally, the following manner may be used.

For each carrier in the carriers that can be configured for the terminal, starting from a start TTI corresponding to the carrier, the base station receives, on the carrier by using a transmission cycle corresponding to the carrier, the SRS sent by the terminal.

For example, there are four SCCs: an SCC0, an SCC1, an SCC2, and an SCC3. A start TTI and a transmission cycle of uplink transmission performed by the terminal on the SCC0 are respectively a start TTI0 and a transmission cycle 0; a start TTI and a transmission cycle of uplink transmission performed by the terminal on the SCC1 are respectively a start TTI1 and a transmission cycle 1; a start TTI and a transmission cycle of uplink transmission performed by the terminal on the SCC2 are respectively a start TTI2 and a transmission cycle 2; a start TTI and a transmission cycle of uplink transmission performed by the terminal on the SCC3 are respectively a start TTI3 and a transmission cycle 3; and a start TTI and a transmission cycle of uplink transmission performed by the terminal on the SCC4 are respectively a start TTI4 and a transmission cycle 4. For the SCC0, starting from the TTI0, an SRS is transmitted on the SCC0 by using the transmission cycle 0; for the SCC1, starting from the TTI1, an SRS is transmitted on the SCC1 by using the transmission cycle 1; for the SCC2, starting from the TTI2, an SRS is transmitted on the SCC2 by using the transmission cycle 2; and for the SCC3, starting from the TTI3, an SRS is transmitted on the SCC3 by using the transmission cycle 3. In this way, the terminal sends an SRS on all the four SCCs. For each carrier, the base station can perform weighting calculation on the carrier according to a corresponding SRS, so as to further implement beamforming.

In this embodiment of the present invention, a maximum quantity of carriers that are corresponding to a same start TTI and a same transmission cycle and in the carriers that can be configured for the terminal is the quantity of carriers that can be simultaneously used by the terminal. That is, when the quantity of carriers that can be simultaneously used by the terminal is 3, there are at most three carriers that are corresponding to a same start TTI and a same transmission cycle. For example, a start TTI and a transmission cycle corresponding to a carrier 1 are a TTI1 and a transmission cycle 1; a start TTI and a transmission cycle corresponding to a carrier 2 are also the TTI1 and the transmission cycle 1; and a start TTI and a transmission cycle corresponding to a carrier 3 are also the TTI1 and the transmission cycle 1. That is, there are at most three carriers whose start TTIs are the TTI1 and transmission cycles are the transmission cycle 1.

Certainly, the foregoing manner only ensures that a quantity of carriers actually simultaneously used by the terminal is less than or equal to the quantity of carriers that can be simultaneously used by the terminal, but this embodiment of the present invention is not limited to the foregoing manner, provided that a start TTI and a transmission cycle corresponding to each carrier can ensure that a quantity of simultaneously used carriers is less than or equal to the quantity of carriers that can be simultaneously used by the terminal, where the quantity of carriers is included in the carrier capability.

In the foregoing description, if the carrier configuration information includes the start TTI and the transmission cycle, the base station receives the SRS when a target TTI arrives.

For example, if a start TTI and a transmission cycle corresponding to an SCC0 are a TTI0 and 10 ms, an SRS is received at the TTI0 by using the SCC0, an SRS is received at a TTI10 by using the SCC0, an SRS is received at a TTI20 by using the SCC0, and so on.

Certainly, there is no need to send an SRS only when the target TTI arrives, but an SRS may be sent when an instruction is received.

Therefore, before the base station performs uplink reception at different transmission time intervals TTIs by using different carriers in the carriers that can be configured for the terminal, the following operation is further included.

The base station sends an SRS sending instruction to the terminal by using different carriers.

In this case, when the base station performs uplink reception at different TTIs by using different carriers in the carriers that can be configured for the terminal, optionally, the following manner may be used.

The base station receives, at different TTIs by using the different carriers used to send the SRS sending instruction, an SRS sent by the terminal according to the SRS sending instruction.

In the foregoing description, a carrier used to send the SRS sending instruction is also used to receive the SRS. Certainly, an identifier of the carrier may be carried in the SRS sending instruction, and the SRS is received on the carrier corresponding to the identifier.

Therefore, before the base station performs uplink reception at different transmission time intervals TTIs by using different carriers in the carriers that can be configured for the terminal, the following operation is further included.

The base station sends the SRS sending instruction to the terminal by using different carriers, where the SRS sending instruction carries identifiers separately corresponding to the different carriers.

In this case, when the base station performs uplink reception at different TTIs by using different carriers in the carriers that can be configured for the terminal, optionally, the following manner may be used.

The base station receives, at different TTIs by using the different carriers separately corresponding to the different identifiers, the SRS sent by the terminal according to the SRS sending instruction. In this embodiment of the present invention, optionally, the carriers that can be configured for the terminal include the carrier used by the base station.

In this embodiment of the present invention, after the base station performs uplink reception at different transmission time intervals TTIs by using different carriers in the carriers that can be configured for the terminal, the following operation is further included.

For any received SRS, the base station performs, according to the any SRS, downlink carrier processing on a carrier used to send the SRS.

The downlink carrier processing may be beamforming, or certainly may be another operation, and details are not described herein.

The foregoing describes a process in which the base station receives the SRS by using the carrier. Certainly, in practical application, the base station may receive uplink data by using the carrier.

Certainly, that the base station receives data is executed by the base station by scheduling the terminal. Therefore, in this embodiment of the present invention, before the base station performs uplink reception at different TTIs by using different carriers in the carriers that can be configured for the terminal, the following operation is further included.

The base station sends a data sending instruction to the terminal.

In this case, when the base station performs uplink reception at different TTIs by using different carriers in the carriers that can be configured for the terminal, optionally, the following manner may be used.

The base station receives, at different TTIs by using different carriers in the carriers that can be configured for the terminal, uplink data sent by the terminal according to the data sending instruction.

In this embodiment of the present invention, to improve service quality, after the base station performs uplink reception at different TTIs by using different carriers in the carriers that can be configured for the terminal, the following operation is further included.

The base station sends a carrier switching instruction to the terminal when determining that a first carrier on which uplink data transmission is performed at a first TTI does not meet a preset condition and that a second carrier meets the preset condition.

In this case, when the base station determines that the first carrier on which uplink data transmission is performed at the first TTI does not meet the preset condition, optionally, the following manner may be used.

The base station determines that load of the first carrier on which uplink data transmission is performed at the first TTI is greater than a preset load threshold and/or that signal quality of the first carrier is less than or equal to a preset signal quality threshold.

When the base station determines that the second carrier meets the preset condition, optionally, the following manner may be used.

The base station determines that load of the second carrier is less than or equal to the preset load threshold and/or that signal quality of the second carrier is greater than the preset signal quality threshold.

The foregoing describes the communication method on a base station side, and the following describes the communication method on a terminal side.

As shown in FIG. 3, in an embodiment, another communication procedure is as follows:
Step 300: A terminal receives carrier configuration information sent by a base station.
Step 310: The terminal determines, according to the carrier configuration information, carriers that can be configured for the terminal.
Step 320: The terminal performs uplink sending at different transmission time intervals TTIs by using different carriers in the carriers that can be configured.

In step 300 to step 320 in this embodiment, after the terminal determines the carriers that can be configured, when performing uplink transmission, the terminal can perform transmission at different TTIs by using different carriers. In this way, uplink transmission is implemented at different moments by using different carriers in an allowed capability range of the terminal, and this resolves a disadvantage of relatively poor flexibility.

As shown in FIG. 2B, at a TTI0, a PCC is used to perform uplink sending; at a TTI1, an SCC0 is used to perform uplink sending; at a TTI2, an SCC1 is used to perform uplink sending; at a TTI3, the PCC is used to perform uplink sending; at a TTI4, an SCC3 is used to perform uplink sending; at a TTI5, the PCC is used to perform uplink sending; at a TTI6, an SCC4 is used to perform uplink sending; and at a TTI7, an SCC2 is used to perform uplink sending.

As shown in FIG. 2C, in this communication process, a different secondary component carrier may be used at a different TTI. For example, at a TTI0, an SCC3 is used to perform uplink sending; at a TTI1, an SCC0 is used to perform uplink sending; at a TTI2, an SCC1 is used to perform uplink sending; at a TTI3, an SCC2 is used to perform uplink sending; at a TTI4, the SCC3 is used to perform uplink sending; at a TTI5, an SCC4 is used to perform uplink sending; at a TTI6, the SCC4 is used to perform uplink sending; and at a TTI7, the SCC2 is used to perform uplink sending. Therefore, sending may be performed at different TTIs by using different carriers, and a disadvantage of relatively poor flexibility is resolved.

In this embodiment, optionally, a quantity of carriers that can be configured for the terminal is greater than or equal to a quantity of carriers that can be simultaneously used by the terminal.

In this embodiment, optionally, before the terminal receives the carrier configuration information sent by the base station, the following step is further included.

The terminal sends a carrier capability of the terminal to the base station, where the carrier capability includes the quantity of carriers that can be simultaneously used by the terminal.

In this embodiment, optionally, the carrier configuration information includes a start TTI and a transmission cycle of uplink transmission performed on each carrier in the carriers that can be configured for the terminal.

For example, there are four secondary component carriers: an SCC0, an SCC1, an SCC2, and an SCC3. The carrier configuration information includes a start TTI0 and a transmission cycle 0 of uplink transmission performed by using the SCC0, a start TTI1 and a transmission cycle 1 of uplink transmission performed by using the SCC1, a start TTI2 and a transmission cycle 2 of uplink transmission performed by using the SCC2, a start TTI3 and a transmission cycle 3 of uplink transmission performed by using the SCC3, and a start TTI4 and a transmission cycle 4 of uplink transmission performed by using the SCC4. If there is another carrier, a start TTI and a transmission cycle of uplink transmission performed by using the secondary component carrier also need to be determined.

In this embodiment, the base station needs to perform a related operation according to an SRS on a carrier in some cases. For example, as shown in FIG. 2D and FIG. 2E, the base station performs weighting according to an SRS sent by the terminal on a carrier, so as to obtain beamforming; and the terminal obtains a relatively high receive level, obtains a gain, and can obtain about 12% array gains by means of an outdoor test.

For another example, to reduce inter-cell interference, for an SFN cell, instead of all RRUs, only a target RRU sends a signal to the terminal, and the target RRU is identified by using an SRS sent by the terminal. As shown in FIG. 2F, if all of an RRU1, an RRU2, an RRU3, and an RRU5 send a signal to a terminal 1, reception performed by another terminal is affected. To avoid interference, a target RRU of the terminal 1 may be selected as the RRU3. Similarly, as shown in FIG. 2G, target RRUs of a terminal 2 may be selected as an RRU4 and an RRU6.

However, currently, the terminal does not transmit an SRS on some carriers. The base station cannot perform weighting on a carrier because the base station cannot obtain an SRS on the carrier, and cannot implement beamforming.

Therefore, in order that the base station can perform weighting on each carrier so as to further implement beamforming, when the terminal performs uplink sending at different transmission time intervals TTIs by using different carriers in the carriers that can be configured, optionally, the following manner may be used.

For each carrier in the carriers that can be configured for the terminal, starting from a start TTI corresponding to the carrier, the terminal sends a sounding reference signal SRS on the carrier by using a transmission cycle corresponding to the carrier.

For example, there are four SCCs: an SCC0, an SCC1, an SCC2, and an SCC3. A start TTI and a transmission cycle of uplink transmission performed by the terminal on the SCC0 are respectively a start TTI0 and a transmission cycle 0; a start TTI and a transmission cycle of uplink transmission performed by the terminal on the SCC1 are respectively a start TTI1 and a transmission cycle 1; a start TTI and a transmission cycle of uplink transmission performed by the terminal on the SCC2 are respectively a start TTI2 and a transmission cycle 2; a start TTI and a transmission cycle of uplink transmission performed by the terminal on the SCC3 are respectively a start TTI3 and a transmission cycle 3; and a start TTI and a transmission cycle of uplink transmission performed by the terminal on the SCC4 are respectively a start TTI4 and a transmission cycle 4. For the SCC0, starting from the TTI0, an SRS is transmitted on the SCC0 by using the transmission cycle 0; for the SCC1, starting from the TTI1, an SRS is transmitted on the SCC1 by using the transmission cycle 1; for the SCC2, starting from the TTI2, an SRS is transmitted on the SCC2 by using the transmission cycle 2; and for the SCC3, starting from the TTI3, an SRS is transmitted on the SCC3 by using the transmission cycle 3.

In this way, the terminal sends an SRS on all the four SCCs. The base station can perform weighting on each carrier according to the SRS on the carrier, so as to further implement beamforming.

In this embodiment, a maximum quantity of carriers that are corresponding to a same start TTI and a same transmission cycle and in the carriers that can be configured for the terminal is the quantity of carriers that can be simultaneously used by the terminal. That is, when the quantity of carriers that can be simultaneously used by the terminal is 3, there are at most three carriers that are corresponding to a same start TTI and a same transmission cycle. For example, a start TTI and a transmission cycle corresponding to a carrier 1 are a TTI1 and a transmission cycle 1; a start TTI and a transmission cycle corresponding to a carrier 2 are also the TTI1 and the transmission cycle 1; and a start TTI and a transmission cycle corresponding to a carrier 3 are also the TTI1 and the transmission cycle 1. That is, there are at most three carriers whose start TTIs are the TTI1 and transmission cycles are the transmission cycle 1.

Certainly, the foregoing manner only ensures that a quantity of carriers actually simultaneously used by the terminal is less than or equal to the quantity of carriers that can be simultaneously used by the terminal, but this embodiment is not limited to the foregoing manner, provided that a start TTI and a transmission cycle corresponding to each carrier can ensure that a quantity of simultaneously used carriers is less than or equal to the quantity of carriers that can be simultaneously used by the terminal, where the quantity of carriers is included in the carrier capability.

In the foregoing description, if the carrier configuration information includes the start TTI and the transmission cycle, the terminal sends the SRS when a target TTI arrives. For example, if a start TTI and a transmission cycle corresponding to an SCC0 are a TTI0 and 10 ms, an SRS is sent at the TTI0 by using the SCC0, an SRS is sent at a TTI10 by using the SCC0, an SRS is sent at a TTI20 by using the SCC0, and so on. Certainly, there is no need to send an SRS only when the target TTI arrives, but the terminal may send the SRS when receiving an SRS sending instruction.

Therefore, in this embodiment, before the terminal performs uplink sending at different transmission time intervals TTIs by using different carriers in the carriers that can be configured, the following operation is further included.

The terminal receives an SRS sending instruction sent by the base station by using different carriers.

In this case, when the terminal performs uplink sending at different transmission time intervals TTIs by using different carriers in the carriers that can be configured, optionally, the following manner may be used.

The terminal sends an SRS at different TTIs by using different carriers used to receive the SRS sending instruction.

In the foregoing description, a carrier used to receive the SRS sending instruction is also used to send the SRS. Certainly, an identifier of the carrier may be carried in the SRS sending instruction, and the SRS is sent on the carrier corresponding to the identifier. Therefore, in this embodiment, before the terminal performs uplink sending at different transmission time intervals TTIs by using different carriers in the carriers that can be configured, the following operation is further included.

The terminal receives the SRS sending instruction sent by the base station by using different carriers, where the SRS sending instruction carries identifiers separately corresponding to the different carriers.

In this case, when the terminal performs uplink sending at different transmission time intervals TTIs by using different carriers in the carriers that can be configured, optionally, the following manner may be used.

The terminal sends the SRS at different TTIs by using the different carriers corresponding to the different identifiers.

In this embodiment, optionally, the carriers that can be configured for the
terminal include the carrier used by the base station.

The foregoing describes a case in which the terminal sends an SRS by using a carrier. Certainly, in practical application, the terminal may further send uplink data by using a carrier.

However, whether the terminal sends an SRS or uplink data is scheduled by the base station. Therefore, before the terminal performs uplink sending at different transmission time intervals TTIs by using different carriers in the carriers that can be configured, the following operation is further included.

The terminal receives a data sending instruction sent by the base station.

In this case, when the terminal performs uplink sending at different transmission time intervals TTIs by using different carriers in the carriers that can be configured, optionally, the following manner may be used.

The terminal sends uplink data according to the data sending instruction at different transmission time intervals TTIs by using different carriers in the carriers that can be configured.

Further, after the terminal performs uplink sending at different transmission time intervals TTIs by using different carriers in the carriers that can be configured, the following operations are further included.

The terminal receives a carrier switching instruction; and
the terminal switches, according to the carrier switching instruction, uplink data transmitted at a first TTI on a first carrier to a second carrier for transmission at a second TTI.

Herein, it should be noted that, when the uplink data transmitted at the first TTI on the first carrier to the second carrier for transmission at the second TTI, in a specific implementation, a transmit channel corresponding to the first carrier is disabled, and a transmit channel corresponding to the second carrier is enabled.

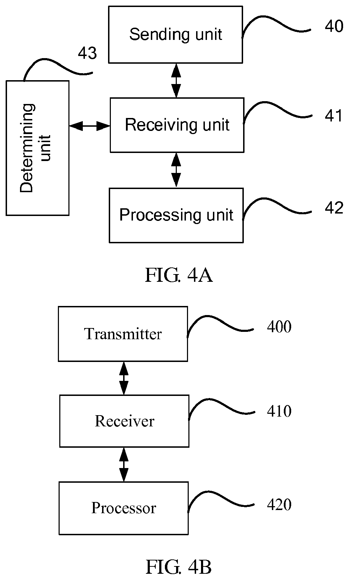

Based on the technical solution in the foregoing corresponding method, as shown in FIG. 4A, an embodiment of the present invention provides a communication device. The communication device includes a sending unit 40 and a receiving unit 41.

The sending unit 40 is configured to send carrier configuration information to a terminal, where the carrier configuration information is used to determine carriers that can be configured for the terminal.

The receiving unit 41 is configured to perform uplink reception at different transmission time intervals TTIs by using different carriers in the carriers that can be configured for the terminal. Optionally, a quantity of carriers that can be configured for the terminal is greater than or equal to a quantity of carriers that can be simultaneously used by the terminal.

Further, the receiving unit 41 is further configured to receive a carrier capability of the terminal that is sent by the terminal, where the carrier capability includes the quantity of carriers that can be simultaneously used by the terminal.

Optionally, the carrier configuration information includes a start TTI and a transmission cycle of uplink transmission performed on each carrier in the carriers that can be configured for the terminal.

Optionally, that the receiving unit 41 performs uplink reception at different transmission time intervals TTIs by using different carriers in the carriers that can be configured for the terminal is specifically:
For each carrier in the carriers that can be configured for the terminal, starting from a start TTI corresponding to the carrier, the receiving unit 41 receives, on the carrier by using a transmission cycle corresponding to the carrier, a sounding reference signal SRS sent by the terminal.

Optionally, a maximum quantity of carriers that are corresponding to a same start TTI and a same transmission cycle and in the carriers that can be configured for the terminal is the quantity of carriers that can be simultaneously used by the terminal.

Further, the sending unit 40 is further configured to send an SRS sending instruction to the terminal by using different carriers.

In this case, that the receiving unit 41 performs uplink reception at different TTIs by using different carriers in the carriers that can be configured for the terminal is specifically:
the receiving unit 41 receives, at different TTIs by using the different carriers used to send the SRS sending instruction, an SRS sent by the terminal according to the SRS sending instruction.

Further, the communication device further includes a processing unit 42, configured to: for any received SRS, perform, according to the any SRS, downlink carrier processing on a carrier used to send the SRS.

Optionally, the carriers that can be configured for the terminal include the carrier used by the base station.

Further, the sending unit 40 is further configured to send a data sending instruction to the terminal. That the receiving unit 41 performs uplink reception at different transmission time intervals TTIs by using different carriers in the carriers that can be configured for the terminal is specifically:
the receiving unit 41 receives, at different TTIs by using different carriers in the carriers that can be configured for the terminal, uplink data sent by the terminal according to the data sending instruction.

Further, the communication device further includes a determining unit 43, configured to determine that a first carrier on which uplink data transmission is performed at a first TTI does not meet a preset condition and that a second carrier meets the preset condition.

The sending unit 40 is further configured to send a carrier switching instruction to the terminal when the determining unit 43 determines that the first carrier on which uplink data transmission is performed at the first TTI does not meet the preset condition and that the second carrier meets the preset condition.

Optionally, that the determining unit 43 determines that the first carrier on which uplink data transmission is performed at the first TTI does not meet the preset condition is specifically:
the determining unit 43 determines that load of the first carrier on which uplink data transmission is performed at the first TTI is greater than a preset load threshold and/or that signal quality of the first carrier is less than or equal to a preset signal quality threshold.

In this case, that the determining unit 43 determines that the second carrier meets the preset condition is specifically:
the determining unit 43 determines that load of the second carrier is less than or equal to the preset load threshold and/or that signal quality of the second carrier is greater than the preset signal quality threshold.

Based on the technical solution in the foregoing corresponding method, as shown in FIG. 4B, an example provides a communication device. The communication device includes a transmitter 400 and a receiver 410.

The transmitter 400 is configured to send carrier configuration information to a terminal, where the carrier configuration information is used to determine carriers that can be configured for the terminal.

The receiver 410 is configured to perform uplink reception at different transmission time intervals TTIs by using different carriers in the carriers that can be configured for the terminal.

It should be noted that, the transmitter 400 is further configured to execute another operation executed by the sending unit 40 in FIG. 4A, and the receiver 410 is further configured to execute another operation executed by the receiving unit 41 in FIG. 4A. The communication device further includes a processor 420, configured to execute an operation executed by the processing unit 42 and an operation executed by the determining unit 43 in FIG. 4A.

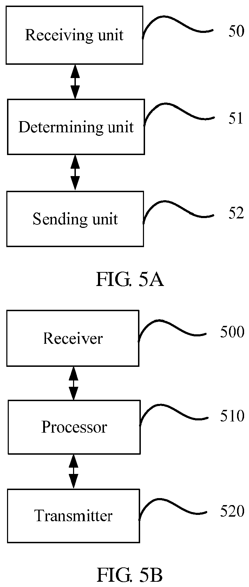

Based on the technical solution in the foregoing corresponding method, as shown in FIG. 5A, an example provides a communication device. The communication device includes a receiving unit 50, a determining unit 51, and a sending unit 52.

The receiving unit 50 is configured to receive carrier configuration information sent by a base station.

The determining unit 51 is configured to determine, according to the carrier configuration information, carriers that can be configured for a terminal.

The sending unit 52 is configured to perform uplink sending at different transmission time intervals TTIs by using different carriers in the carriers that can be configured. Optionally, a quantity of carriers that can be configured for the terminal is greater than or equal to a quantity of carriers that can be simultaneously used by the terminal. Further, the sending unit 52 is further configured to send a carrier capability of the terminal to the base station, where the carrier capability includes the quantity of carriers that can be simultaneously used by the terminal.

Optionally, the carrier configuration information includes a start TTI and a transmission cycle of uplink transmission performed on each carrier in the carriers that can be configured for the terminal.

Optionally, that the sending unit 52 performs uplink sending at different transmission time intervals TTIs by using different carriers in the carriers that can be configured is specifically:
for each carrier in the carriers that can be configured for the terminal, starting from a start TTI corresponding to the carrier, the sending unit 52 sends a sounding reference signal SRS on the carrier by using a transmission cycle corresponding to the carrier.

Optionally, a maximum quantity of carriers that are corresponding to a same start TTI and a same transmission cycle and in the carriers that can be configured for the terminal is the quantity of carriers that can be simultaneously used by the terminal. Further, the receiving unit 50 is further configured to receive an SRS sending instruction sent by the base station by using different carriers.

That the sending unit 52 performs uplink sending at different transmission time intervals TTIs by using different carriers in the carriers that can be configured is specifically:
the sending unit 52 sends an SRS at different TTIs by using different carriers used to receive the SRS sending instruction.

Optionally, the carriers that can be configured for the terminal include the carrier used by the base station.

Further, the receiving unit 50 is further configured to receive a data sending instruction sent by the base station.

That the sending unit 52 performs uplink sending at different transmission time intervals TTIs by using different carriers in the carriers that can be configured is specifically:
the sending unit 52 sends uplink data according to the data sending instruction at different transmission time intervals TTIs by using different carriers in the carriers that can be configured.

Further, the receiving unit 50 is further configured to receive a carrier switching instruction.

The sending unit 52 is specifically configured to switch, according to the carrier switching instruction, uplink data transmitted on a first carrier at a first TTI to a second carrier for transmission at a second TTI.

Based on the technical solution in the foregoing corresponding method, as shown in FIG. 5B, an embodiment provides a communication device. The communication device includes a receiver 500, a processor 510, and a transmitter 520.

The receiver 500 is configured to receive carrier configuration information sent by a base station.

The processor 510 is configured to determine, according to the carrier configuration information, carriers that can be configured for a terminal.

The transmitter 520 is configured to perform uplink sending at different transmission time intervals TTIs by using different carriers in the carriers that can be configured.

It should be noted that, the receiver 500 is further configured to execute another operation executed by the receiving unit 50 in FIG. 5A, the processor 510 is further configured to execute another operation executed by the determining unit 51 in FIG. 5A, and the transmitter 520 is further configured to execute another operation executed by the sending unit 52 in FIG. 5A.

A person skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

## Claims

1. A communication method, comprising:
sending (200), by a base station, carrier configuration information to a terminal, wherein the carrier configuration information is used to determine carriers that can be configured for the terminal; and
performing (210), by the base station, uplink reception at different transmission time intervals, TTIs, by using different carriers in the carriers that can be configured for the terminal, wherein
before the performing, by the base station, uplink reception at different transmission time intervals TTIs by using different carriers in the carriers that can be configured for the terminal, the method further comprises:
sending, by the base station, a data sending instruction to the terminal;
the performing, by the base station, uplink reception at different transmission time intervals TTIs by using different carriers in the carriers that can be configured for the terminal comprises:
receiving, by the base station at different TTIs by using different carriers in the carriers that can be configured for the terminal, uplink data sent by the terminal according to the data sending instruction; and
after the performing, by the base station, uplink reception at different transmission time intervals TTIs by using different carriers in the carriers that can be configured for the terminal, the method is **characterized by:**
sending, by the base station, a carrier switching instruction to the terminal when determining that a first carrier on which uplink data transmission is performed at a first TTI does not meet a preset condition and that a second carrier meets the preset condition.

2. The method according to claim 1, wherein a quantity of carriers that can be configured for the terminal is greater than or equal to a quantity of carriers that can be simultaneously used by the terminal.

3. The method according to claim 1 or 2, wherein before the sending, by a base station, carrier configuration information to a terminal, the method further comprises:
receiving, by the base station, a carrier capability of the terminal that is sent by the terminal, wherein the carrier capability comprises the quantity of carriers that can be simultaneously used by the terminal.

4. A communication device, comprising:
a sending unit (40), configured to send carrier configuration information to a terminal, wherein the carrier configuration information is used to determine carriers that can be configured for the terminal;
a receiving unit (41), configured to perform uplink reception at different transmission time intervals TTIs by using different carriers in the carriers that can be configured for the terminal, wherein
the sending unit is further configured to send a data sending instruction to the terminal; and
the receiving unit, configured to perform uplink reception at different transmission time intervals TTIs by using different carriers in the carriers that can be configured for the terminal, is specifically configured to:
receive, at different TTIs by using different carriers in the carriers that can be configured for the terminal, uplink data sent by the terminal according to the data sending instruction; and
a determining unit, configured to determine that a first carrier on which uplink data transmission is performed at a first TTI does not meet a preset condition and that a second carrier meets the preset condition; and
**characterized in that**
the sending unit is further configured to send a carrier switching instruction to the terminal when the determining unit determines that the first carrier on which uplink data transmission is performed at the first TTI does not meet the preset condition and that the second carrier meets the preset condition.

5. The communication device according to claim 4, wherein a quantity of carriers that can be configured for the terminal is greater than or equal to a quantity of carriers that can be simultaneously used by the terminal.

6. The communication device according to claim 4 or 5, wherein the receiving unit is further configured to receive a carrier capability of the terminal that is sent by the terminal, wherein the carrier capability comprises the quantity of carriers that can be simultaneously used by the terminal.

## Patentansprüche

1. Kommunikationsverfahren, Folgendes umfassend:
Senden (200), durch eine Basisstation, von Trägerkonfigurationsinformationen zu einem Endgerät, wobei die Trägerkonfigurationsinformationen verwendet werden, um Träger zu bestimmen, die für das Endgerät konfiguriert werden können; und
Durchführen (210), durch die Basisstation, eines Uplink-Empfangs zu unterschiedlichen Übertragungszeitintervallen, TTIs, durch Verwendung unterschiedlicher Träger in den Trägern, die für das Endgerät konfiguriert werden können, wobei
vor der Durchführung, durch die Basisstation, eines Uplink-Empfangs bei unterschiedlichen Übertragungszeitintervallen, TTIs, durch Verwendung unterschiedlicher Träger in den Trägern, die für das Endgerät konfiguriert werden können, das Verfahren ferner Folgendes umfasst:
Senden, durch die Basisstation, einer Datensendeanweisung zu dem Endgerät,
wobei die Durchführung, durch die Basisstation, eines Uplink-Empfangs bei unterschiedlichen Übertragungszeitintervallen, TTIs, durch Verwendung unterschiedlicher Träger in den Trägern, die für das Endgerät konfiguriert werden können, Folgendes umfasst:
Empfangen, durch die Basisstation, bei unterschiedlichen TTIs durch Verwendung unterschiedlicher Träger in den Trägern, die für das Endgerät konfiguriert werden können, von Uplink-Daten, die von dem Endgerät gemäß der Datensendeanweisung gesendet wurden; und
wobei nach der Durchführung, durch die Basisstation, eines Uplink-Empfangs bei unterschiedlichen Übertragungszeitintervallen, TTIs, durch Verwendung unterschiedlicher Träger in den Trägern, die für das Endgerät konfiguriert werden können, das Verfahren durch Folgendes gekennzeichnet ist:
Senden, durch die Basisstation, einer Trägerwechselanweisung zu dem Endgerät, wenn bestimmt wird, dass ein erster Träger, auf dem Uplink-Datenübertragung bei einem ersten TTI durchgeführt wird, eine vorgegebene Bedingung nicht erfüllt, und dass ein zweiter Träger die vorgegebene Bedingung erfüllt.

2. Verfahren gemäß Anspruch 1, wobei eine Menge von Trägern, die für das Endgerät konfiguriert werden können, größer als eine oder gleich einer Menge von Trägern ist, die gleichzeitig von dem Endgerät benutzt werden können.

3. Verfahren gemäß Anspruch 1 oder 2, wobei vor dem Senden, durch eine Basisstation, von Trägerkonfigurationsinformationen zu einem Endgerät das Verfahren ferner Folgendes umfasst:
Empfangen, durch die Basisstation, einer Trägerfähigkeit des Endgerätes, die von dem Endgerät gesendet wird, wobei die Trägerfähigkeit die Menge von Trägern umfasst, die gleichzeitig von dem Endgerät benutzt werden können.

4. Kommunikationsvorrichtung, die Folgendes umfasst:
eine Sendeeinheit (40), die dazu ausgelegt ist, Trägerkonfigurationsinformationen zu einem Endgerät zu senden, wobei die Trägerkonfigurationsinformationen verwendet werden, um Träger zu bestimmen, die für das Endgerät konfiguriert werden können;
eine Empfangseinheit (41), die dazu ausgelegt ist, Uplink-Empfang bei unterschiedlichen Übertragungszeitintervallen, TTIs, durch Verwendung unterschiedlicher Träger in den Trägern, die für das Endgerät konfiguriert werden können, durchzuführen,
wobei die Sendeeinheit ferner dazu ausgelegt ist, eine Datensendeanweisung zu dem Endgerät zu senden; und
die Empfangseinheit, die dazu ausgelegt ist, Uplink-Empfang bei unterschiedlichen Übertragungszeitintervallen, TTIs, durch Verwendung unterschiedlicher Träger in den Trägern, die für das Endgerät konfiguriert werden können, durchzuführen, speziell für Folgendes ausgelegt ist:
Empfangen, bei unterschiedlichen TTIs durch Verwendung unterschiedlicher Träger in den Trägern, die für das Endgerät konfiguriert werden können, von Uplink-Daten, die von dem Endgerät gemäß der Datensendeanweisung gesendet wurden; und
eine Bestimmungseinheit, die dazu ausgelegt ist zu bestimmen, dass ein erster Träger, auf dem Uplink-Datenübertragung bei einem ersten TTI durchgeführt wird, eine vorgegebene Bedingung nicht erfüllt, und dass ein zweiter Träger die vorgegebene Bedingung erfüllt; und
**dadurch gekennzeichnet, dass**,
die Sendeeinheit ferner dazu ausgelegt ist, eine Trägerwechselanweisung zu dem Endgerät zu senden, wenn die Bestimmungseinheit bestimmt, dass der erste Träger, auf dem Uplink-Datenübertragung beim ersten TTI durchgeführt wird, eine vorgegebene Bedingung nicht erfüllt, und dass der zweite Träger die vorgegebene Bedingung erfüllt.

5. Kommunikationsgerät gemäß Anspruch 4, wobei eine Menge von Trägern, die für das Endgerät konfiguriert werden können, größer als eine oder gleich einer Menge von Trägern ist, die gleichzeitig von dem Endgerät benutzt werden können.

6. Kommunikationsgerät gemäß Anspruch 4 oder 5, wobei die Empfangseinheit ferner dazu ausgelegt ist, eine Trägerfähigkeit des Endgerätes, die von dem Endgerät gesendet wird, zu empfangen, wobei die Trägerfähigkeit die Menge von Trägern umfasst, die gleichzeitig von dem Endgerät benutzt werden können.

## Revendications

1. Procédé de communication comprenant de :
envoyer (200), par une station de base, des informations de configuration de porteuses à un terminal, dans lequel les informations de configuration de porteuses sont utilisées pour déterminer des porteuses qui peuvent être configurées pour le terminal ; et
effectuer (210), par la station de base, une réception de liaison montante à différents intervalles de temps de transmission, TTI, en utilisant différentes porteuses dans les porteuses qui peuvent être configurées pour le terminal, dans lequel avant d'effectuer, par la station de base, une réception de liaison montante à différents intervalles de temps de transmission, TTI, en utilisant différentes porteuses dans les porteuses qui peuvent être configurées pour le terminal, le procédé comprend en outre de :
envoyer, par la station de base, une instruction d'envoi de données au terminal ;
l'exécution, par la station de base, d'une réception de liaison montante à différents intervalles de temps de transmission, TTI, en utilisant différentes porteuses dans les porteuses qui peuvent être configurées pour le terminal comprend de :
recevoir, par la station de base à différents TTI en utilisant différentes porteuses dans les porteuses qui peuvent être configurées pour le terminal, des données de liaison montante envoyées par le terminal conformément à l'instruction d'envoi de données ; et
après avoir effectué, par la station de base, la réception de liaison montante à différents intervalles de temps de transmission, TTI, en utilisant différentes porteuses dans les porteuses qui peuvent être configurées pour le terminal, le procédé est **caractérisé par** : l'envoi, par la station de base, d'une instruction de commutation de porteuse au terminal lorsqu'il est déterminé qu'une première porteuse sur laquelle la transmission de données de liaison montante est effectuée à un premier TTI ne satisfait pas à une condition prédéfinie et qu'une seconde porteuse satisfait à la condition prédéfinie.

2. Procédé selon la revendication 1, dans lequel une quantité de porteuses qui peuvent être configurées pour le terminal est supérieure ou égale à une quantité de porteuses qui peuvent être utilisées simultanément par le terminal.

3. Procédé selon la revendication 1 ou 2, dans lequel avant l'envoi, par une station de base, d'informations de configuration de porteuses à un terminal, le procédé comprend en outre de :
recevoir, par la station de base, une capacité de porteuses du terminal qui est envoyée par le terminal, dans lequel la capacité de porteuses comprend la quantité de porteuses qui peuvent être utilisées simultanément par le terminal.

4. Dispositif de communication, comprenant :
une unité d'envoi (40), configurée pour envoyer des informations de configuration de porteuses à un terminal, dans lequel les informations de configuration de porteuses sont utilisées pour déterminer des porteuses qui peuvent être configurées pour le terminal ;
une unité de réception (41), configurée pour effectuer une réception de liaison montante à différents intervalles de temps de transmission, TTI, en utilisant différentes porteuses dans les porteuses qui peuvent être configurées pour le terminal, dans lequel l'unité d'envoi est en outre configurée pour envoyer une instruction d'envoi de données au terminal ; et
l'unité de réception, configurée pour effectuer une réception de liaison montante à différents intervalles de temps de transmission, TTI, en utilisant différentes porteuses dans les porteuses qui peuvent être configurées pour le terminal, est spécifiquement configurée pour :
recevoir, à différents TTI en utilisant différentes porteuses dans les porteuses qui peuvent être configurées pour le terminal, des données de liaison montante envoyées par le terminal conformément à l'instruction d'envoi de données ; et
une unité de détermination, configurée pour déterminer qu'une première porteuse sur laquelle une transmission de données de liaison montante est effectuée à un premier TTI ne satisfait pas à une condition prédéfinie et qu'une seconde porteuse satisfait à la condition prédéfinie ; et
**caractérisé en ce que**
l'unité d'envoi est en outre configurée pour envoyer une instruction de commutation de porteuse au terminal lorsque l'unité de détermination détermine que la première porteuse sur laquelle la transmission de données de liaison montante est effectuée au premier TTI ne satisfait pas à la condition prédéfinie et que la seconde porteuse satisfait à la condition prédéfinie.

5. Dispositif de communication selon la revendication 4, dans lequel une quantité de porteuses qui peuvent être configurées pour le terminal est supérieure ou égale à une quantité de porteuses qui peuvent être utilisées simultanément par le terminal.

6. Dispositif de communication selon la revendication 4 ou 5, dans lequel l'unité de réception est en outre configurée pour recevoir une capacité de porteuses du terminal qui est envoyée par le terminal, dans lequel la capacité de porteuses comprend la quantité de porteuses qui peuvent être utilisées simultanément par le terminal.
